# EUROPEAN PATENT SPECIFICATION

(11) **EP 4 746 009 B1**
(45) Date of publication and mention of the grant of the patent: **09.12.2026**
(21) Application number: 25161844.3
(22) Date of filing: 05.03.2025
(51) Int. Cl.: H01G 2/06, H01G 9/06, H01G 9/08, H01G 9/10, H01G 9/012, H01G 9/15

(54) **ULTRA-THIN SOLID ALUMINUM ELECTROLYTIC CAPACITOR**
ULTRADÜNNER FESTELEKTROLYTKONDENSATOR AUS ALUMINIUM
CONDENSATEUR ÉLECTROLYTIQUE À BASE D'ALUMINIUM SOLIDE ULTRA-MINCE

(30) Priority: 14.11.2024 CN 202411623591
(43) Date of publication of application: 20.05.2026
(73) Proprietor: Capxon Electronic Technology Co., Ltd, Shenzhen, Guangdong 518106 (CN)
(72) Inventor: LIN, CHIN-TSUN, Shenzhen, 518106 (CN); YANG, CHENG-YI, Shenzhen, 518106 (CN); LIN, YUAN-YU, Shenzhen, 518106 (CN); LIN, I-CHU, Shenzhen, 518106 (CN); WU, HSIU-WEN, Shenzhen, 518106 (CN); ZOU, RUN HUA, Shenzhen, 518106 (CN)
(74) Representative: Vitina, Maruta

(56) References cited:
- EP-A1- 0 029 098
- US-A1- 2020 411 252
- US-A1- 20230 142 563

## Description

### TECHNICAL FIELD

This application relates to aluminum electrolytic capacitors, and more particularly to an ultra-thin solid aluminum electrolytic capacitor.

### BACKGROUND

Solid aluminum electrolytic capacitors have been extensively used in electronic products. In order to conform to the trend of thinning electronic products and components, capacitors are required to be more and more thin. Though traditional solid aluminum electrolytic capacitors have been improved and upgraded to some extents in the structure and manufacturing process, there are still several technical bottlenecks in the thinning and miniaturization design of capacitors. At present, the surface-mount solid aluminum electrolytic capacitors are mainly fabricated by attaching a base to an encapsulated capacitor body, and bending the leads. The assembly of the traditional solid aluminum electrolytic capacitors, which involves mounting the rubber cover before mounting the base, has some shortcomings. For example, in the current fabrication method, the rubber cover is sleeved on the element, and then compressed and sealed with the shell opening, so the product height is greatly dependent on the thickness of the butyl rubber cover. To meet the airtightness, heat-resistant and shock-resistant requirements and prevent the product defects caused by moisture and gas expansion, the thickness of the rubber cover should be 1.5 mm or more, which restricts the minimum height limit of the solid aluminum electrolytic capacitors. The minimum height of the existing solid aluminum electrolytic capacitors is 4.2, which still cannot be applied in some scenarios. Breaking through the thickness limitation has become a major challenge in the industry. EP 0 029 098 A1 discloses a capacitor sealing means having a tubular case, a metal disk solidly joined to a rubber plug with a flange-shaped ring covering the outer rim of the metal disk, and an electrical feedthrough, wherein the sealing means is inserted into the case opening and sealed by a sealing pleat and bent case rim to provide gas-tight and liquid-tight sealing and suppress electrolyte evaporation. US 2023/142563 A1 relates to an electrolytic capacitor having a case, capacitor element, opening sealing member, insulating base, and resin layers, and addresses sealing reliability by using injected resin to seal between the base and opening sealing member and around the terminal lead passages while controlling resin flow and suppressing gas passage.

US 2020/411252 A1 relates to an electrolytic capacitor having a case, capacitor element, sealing member, resin member, base plate, and leads, in which the resin member is filled between the sealing member and the base plate and cooperates with the curled portion of the case to improve adhesion and sealing and suppress air or water entry and evaporation and diffusion of the electrolytic solution.

### SUMMARY

In view of the deficiencies in the prior art, this application provides, according to Claim 1, an ultra-thin solid aluminum electrolytic capacitor, where the cover body and the shell opening are integrally assembled by injection molding, such that the cover can still meet the requirements for heat resistance and shock resistance even with a reduced thickness. This design breaks through the thickness limitation of the product while maintaining strong heat resistance and shock resistance, arriving at an ultra-thin design of the solid aluminum electrolytic capacitor.

Embodiments of the invention are set forth with the appended dependent claims.

Technical solutions of this application are described as follows.

This application provides, according to Claim 1, an ultra-thin solid aluminum electrolytic capacitor, comprising
a case;
an element; and
a cover;
wherein a side of the case is provided with an opening; a flanged clamping portion is provided at the opening; and the cover is embedded inside the opening through injection molding to encapsulate the element in the case;
the cover comprises a base plate, an inner plug, and a sealing side wall; the sealing side wall and the inner plug are vertically provided at an upper end face of the base plate; the inner plug is located at an inner side of the sealing side wall; a groove is provided between the inner plug and the sealing side wall; the groove is abutted against a part of the case in the groove; an end face of the inner plug is symmetrically provided with two lead holes running through the cover; and each of the two lead holes is provided with a lead wire as an electrode terminal.

In an embodiment, the cover is formed by filling a cavity between the opening of the case and the element with a molten plastic, and solidification.

In an embodiment, an outer edge of an upper end of the inner plug is provided with a flange structure protruding outwardly; and a diameter of an outer ring of the flange structure is larger than a diameter of an outer ring of the inner plug.

In an embodiment, a side wall of the flange structure is circumferentially provided with a concave surface; and the concave surface is configured to fit an inner wall of an annular concave portion in the case.

In an embodiment, an inner wall of an end of the sealing side wall away from the base plate is provided with a protruding portion; and the protruding portion is configured to fit an outer wall of an annular concave portion in the case.

In an embodiment, the groove comprises a vertical groove portion and a horizontal groove portion; the vertical groove portion is intersected and communicated with the horizontal groove portion to form an L-shaped configuration; the vertical groove portion is embedded in a side wall of the case; and the horizontal groove portion is embedded in the flanged clamping portion.

In an embodiment, two lead slots are provided at an outer side of a bottom of the base plate; first ends of the two lead slots are communicated with the two lead holes, respectively; and second ends of the two lead slots are configured to extend to a side wall of the base plate, wherein the second ends are ends of the two lead slots away from the two lead holes, respectively.

In an embodiment, a first spacer is provided between the end face of the inner plug and the element; and a second spacer is provided between an end face of the element and a top surface of an inner cavity of the case.

In an embodiment, an end of the sealing side wall away from the base plate is configured to extend to form a clamping wall; and an inner side of the clamping wall is configured to fit an outer wall of the case.

In an embodiment, the lead wire comprises a first portion, a second portion, a third portion and a fourth portion; the first portion has a sheet-shaped structure; a first end of the first portion is connected to the element; a second end of the first portion is connected to a first end of the second portion; a second end of the second portion is weldedly connected to a first end of the third portion; a second end of the third portion is connected to an end of the fourth portion; the third portion and the fourth portion both have a flat structure; and the third portion and the fourth portion are configured to together form a L-shaped structure.

Compared with the prior art, this application has the following advantages.

The ultra-thin solid aluminum electrolytic capacitor provided in this application can solve the problem in the prior art that the solid aluminum electrolytic capacitor needs to be connected to the base seat, resulting in an increase in the total height of the product and cannot be thinned.

In this application, the cover is molded with the opening of the case into the whole structure by injection molding. The cover in the case of reducing the thickness can still meet the heat resistance and shock resistance requirements. The solid aluminum electrolytic capacitor with the cover breaks through the limit thinness of the product, and still has strong heat resistance and shock resistance, to achieve the ultra-thinning of solid aluminum electrolytic capacitors. Based on the cover designed herein, the longitudinal length difference between the aluminum foil and the electrolytic paper in the element can be reduced to 0.5 mm. The lead wire can be designed to a flattened structure with the simple "B" part (without aluminum post), making the lead wire miniaturized. The total height of the entire solid aluminum electrolytic capacitor can be controlled to less than 3.0 mm, which breaks through the size limit of the current products without weakening heat resistance, shock resistance and air tightness, realizing the thinned design. The electrolytic capacitor not only meets the size requirements for thinner design of electronic products, but also improves the sealing effect, reflow soldering thermal stress, and shock resistance, and replaces the traditional encapsulation method of first encapsulating the rubber cover and then attaching the vibration-resistant base seat to the outer side. The service life of solid aluminum electrolytic capacitor is prolonged. Moreover, the manufacturing process of the solid aluminum electrolytic capacitor is simple, easy to operate, low cost, and can meet the needs of the production field. The cover structure provided herein can expand the application ranges of surface-mount solid aluminum electrolytic capacitors, solid-liquid hybrid aluminum electrolytic capacitors, and liquid aluminum electrolytic capacitors.

### BRIEF DESCRIPTION OF THE DRAWINGS

In order to illustrate the technical solutions in the embodiments of the present disclosure or in the prior art more clearly, the drawings required in the description of the embodiments or the prior art will be briefly described below. Obviously, presented in the drawings are merely some embodiments of the present disclosure, which are not intended to limit the disclosure. For those skilled in the art, other drawings may also be obtained according to the drawings provided herein without paying creative efforts.
Fig. 1 is a section view of an ultra-thin solid aluminum electrolytic capacitor according to an embodiment of the present disclosure;
Fig. 2 is a perspective view of the ultra-thin solid aluminum electrolytic capacitor according to an embodiment of the present disclosure;
Fig. 3 is another perspective view of the ultra-thin solid aluminum electrolytic capacitor according to an embodiment of the present disclosure;
Fig. 4 is a perspective view of a cover according to Embodiment 1 of the present disclosure;
Fig. 5 is a section view of the cover according to Embodiment 1 of the present disclosure;
Fig. 6 is a section view of the cover according to Embodiment 2 of the present disclosure;
Fig. 7 is a section view of the cover according to Embodiment 3 of the present disclosure;
Fig. 8 is a perspective view of a case according to an embodiment of the present disclosure;
Fig. 9 is a front view of a lead wire according to an embodiment of the present disclosure; and
Fig. 10 is a side view of the lead wire according to an embodiment of the present disclosure.

In the drawings: 1, case; 2, element; 3, lead wire; 4, cover; 5, first spacer; 6, second spacer; 101, opening; 102, flanged clamping portion; 103, annular concave portion; 301, first portion; 302, second portion; 303, fourth portion; 304, third portion; 401, base plate; 402, inner plug; 403, sealing side wall; 404, groove; 405, lead hole; 4011, lead slot; 4012, chamfer; 4021, flange structure; 4022, concave surface; 4031, protruding portion; 4032, clamping wall; 4041, vertical groove portion; and 4042, horizontal groove portion.

### DETAILED DESCRIPTION OF EMBODIMENTS

The technical solutions of the disclosure will be described in detail below in combination with the drawings in the embodiments. Obviously, described below are merely some embodiments of the disclosure, which are not intended to limit the disclosure. The following detailed description is merely illustrative, and is not intended to limit the scope of the disclosure. For those skilled in the art, other embodiments obtained based on these embodiments without paying creative efforts should fall within the scope of the disclosure defined by the appended claims.

As used herein, it should be noted that the orientation or positional relationship indicated by the terms such as "upper", "lower", "bottom", "inside", "outside" is based on the orientation or positional relationship shown in the accompanying drawings, which are only for the convenience of describing the technical solutions and simplifying the description, rather than indicating or implying that the indicated device or element must have a specific orientation, be constructed or operated in a specific orientation. Therefore, these terms should not be understood as a limitation of the present disclosure. Moreover, "A part" and "B part" are often used in the related field to indicate structural parts of lead wires, which are only for the convenience of describing the technical solutions and simplifying the description.

### Embodiment 1

An ultra-thin wound solid aluminum electrolytic capacitor is prepared as follows.

### (S1) Preparation of an element 2

An anode aluminum foil, a cathode aluminum foil, and an electrolytic paper with a preset size are prepared by cutting. The anode aluminum foil and the cathode aluminum foil are nailed with the lead wires 3, respectively. The anode aluminum foil, the electrolytic paper, and the cathode aluminum foil are sequentially stacked, and then wound to obtain the element 2.

(S2) The element 2 is assembled into the inner cavity of the case 1, and a sealing device folds the opening 101 of the case 1 inwardly to form a flanged clamping portion 102.

(S3) The case 1 with the element 2 assembled inside is transferred into an injection mold, and the screw rod or plunger of the injection molding machine injects the molten plastic into the injection mold through a nozzle, and the solid aluminum electrolytic capacitor sealed with a cover 4 is obtained after cooling.

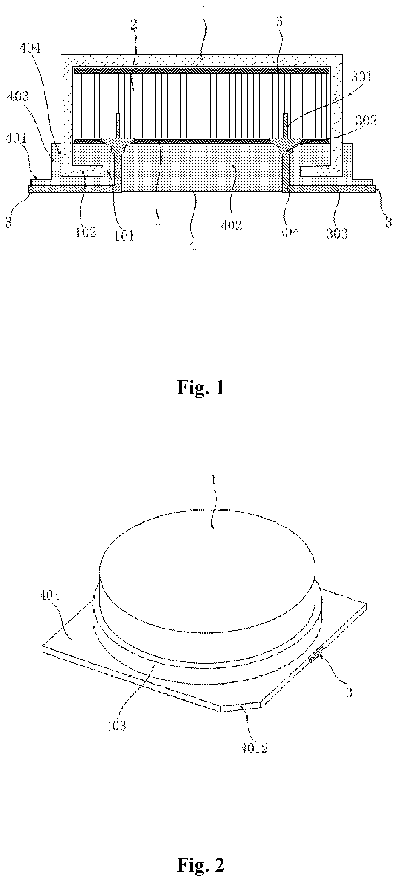

As shown in Figs. 1-4, the opening 101 is opened on a side of the case 1, and the flanged clamping portion 102 is provided at the opening 101. The cover 4 is embedded inside the opening 101 by injection molding to encapsulate the element 2 inside the case 1. The cover 4 includes a base plate 401, an inner plug 402, and a sealing side wall 403. The sealing side wall 403 and the inner plug 402 are vertically provided at an upper end face of the base plate 401. The inner plug 402 is located at an inner side of the sealing side wall 403. A groove 404 is provided between the inner plug 402 and the sealing side wall 403. The groove 404 is tightly connected to inner walls and outer walls of the case 1 in the groove 404. An end face of the inner plug 402 is symmetrically provided with two lead holes 405 running through the cover 4. Each of the two lead holes 405 is provided with a lead wire 3 as an electrode terminal. Specifically, the solid aluminum electrolytic capacitor is composed of the case 1, the element 2, the lead wire 3, and the cover 4. The cover 4 hermetically encapsulates the element 2 inside the case 1, blocks external water vapor from entering the element 2, and maintains a dry state of the inner cavity of the case 1 and the element 2. Thus, the conductive polymer in the element 2 is prevented from reacting with water vapor and failing. The opening 101 of the case 1 is filled to form the cover 4 injection molding, so that the inner cavity of the case 1 forms the sealing cavity. The groove 404 is combined with the case 1. Specifically, the inner plug 402 of the cover 4 is closely combined with the inner wall of the opening 101 of the case 1 and the outer wall of the flanged clamping portion 102, thereby sealing the inner side of the opening 101. Moreover, the sealing side wall 403 of the cover 4 is closely combined with the outer wall of the case 1, thereby sealing the outer side of the opening 101, so as to improve the sealing effect from the inside and outside, respectively. Meanwhile, the combination of the flanged clamping portion 102 and the cover 4 makes the solid aluminum electrolytic capacitor not deformed under high temperature and vibration environment, prevents the cover 4 from deformation and movement outward under high temperature or high pressure, and improves high temperature resistance and shock resistance.

The upper end face of the base plate 401 is connected to the lower end face of the inner plug 402 and the lower end face of the sealing side wall 403, respectively, so that the base plate 401, the inner plug 402, the sealing side wall 403 form an integrated structure. On the one hand, such an integrated structure improves the sealing property and rigidity, and in the high temperature of reflow soldering, even if the thickness of the base plate 401 is reduced to 0.3 mm or less, the base plate 401 will not produce deformation. On the other hand, the base plate 401, the inner plug 402, the sealing side wall 403 are integrated in the integrative molding way, the base plate 401 increases the support force to protect the lead wire 3, and the integrated structure of the base plate 401 and the inner plug 402 improves the sealing effect, heat-resistant effect, and shock-resistant effect, so that the cover 4 at the same time has heat-resistant and shock-resistant performances. Thus, the cover 4 has both heat-resistant and shock-resistant performances without the need for additional shock-resistant bases. Through the injection molding of the cover 4 and the opening 101 of the case 1, the cover 4 can still meet the requirements of heat resistance and firmness even with a reduced thickness. The inner plug 402 and the sealing side wall 403 are arranged coaxially. In this embodiment, preferably, the inner plug 402 is a cylindrical structure, the cross section of the sealing side wall 403 is a ring-shaped structure, and the axes of the inner plug 402 and the sealing side wall 403 coincide. In another embodiment, the cross section of the inner plug 402 and the sealing side wall 403 may also be polygonal. The total height of the entire solid aluminum electrolytic capacitor can be controlled to be 3.0 mm or less, which breaks through the minimum height limitation of the current product, and enables the cover to be applied to the solid aluminum electrolytic capacitor while maintaining heat resistance and shock resistance. The height of the solid aluminum electrolytic capacitor with the cover 4 can be greatly reduced while maintaining good sealing, heat resistance, and shock resistance, thus realizing the thin design of the product.

The cover 4 is formed by filling a cavity between the opening 101 of the case 1 and the element 2 with a molten plastic and solidification, so that the molten plastic is tightly bonded to the inner and outer parts in the opening 101.

Specifically, after the case 1 is assembled with the element 2, the case 1 with the element 2 is placed in the injection mold. When the molten plastic reaches a predetermined temperature and pressure, the screw rod or the plunger of the injection molding machine injects molten plastic into the cavity between the outer side of the opening 101 and the injection mold through the nozzle, and the sealing side wall 403 is formed after injection. The cavity between the inner side of the opening 101 and the flanged clamping portion 102 and the element 2 is injected with molten plastic to form the base plate 401 and the inner plug 402, after cooling, thereby obtaining the integrated cover 4, the plastic is tightly combined with the inner and outer parts in the opening 101. The cover 4, the case 1, and the opening 101 are integrally assembled by injection molding. The cover 4 hermetically seals the element 2 inside the case 1 to obtain the thin solid aluminum electrolytic capacitor.

The outer edge of the upper end of the inner plug 402 is provided with a flange structure 4021 protruding outwardly. The diameter of an outer ring of the flange structure 4021 is larger than the diameter of an outer ring of the inner plug 402. Specifically, after the injection molding is completed, the inner plug 402 is formed inside the opening 101. In this embodiment, the case 1 is cylindrical, so the inner plug 402 is a cylindrical body, which is closely fitted with the inner wall of the case 1. In other embodiments, the cross-sectional shape of the case 1 may be rectangular or triangular, and the cross-sectional shape of the inner plug 402 is also rectangular or triangular. In addition, in this embodiment, the flanged clamping portion 102 at the opening 101 is folded inwardly, in other embodiments, the flanged clamping portion 102 can be set to fold outwardly, which can also clamp the cover 4 to improve heat resistance and firmness.

The outer edge of the upper end of the inner plug 402 is provided with the flange structure 4021 protruding outwardly. The diameter of the outer ring of the flange structure 4021 is larger than that of the outer ring of the inner plug 402. The peripheral sidewall of the flange structure 4021 and the lower end surface of the flange structure 4021 form the step structure. The step structure fits with the flanged clamping portion 102 to improve stability, heat resistance and sealing performances, and in addition to prevent the cover 4 from moving when the air pressure expands under high temperature. The outer peripheral side of the flange structure 4021 closely fits to the inner peripheral wall of the case 1, and the lower end surface of the flange structure 4021 closely fits to the upper end surface of the flanged clamping portion 102 at the opening 101, improving the sealing effect.

The groove 404 includes a vertical groove portion 4041 and a horizontal groove portion 4042. The vertical groove portion 4041 is intersected and communicated with the horizontal groove portion 4042 to form an L-shaped configuration. The vertical groove portion 4041 is embedded in the side wall of the case 1. The horizontal groove portion 4042 is embedded in the flanged clamping portion 102 at the opening 101.

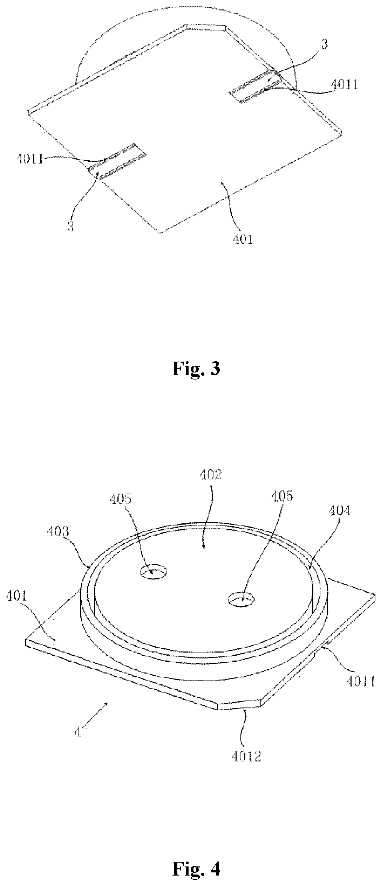

Specifically, referring to Figs. 4-5, the groove 404 is formed by embedding the peripheral wall of the case 1 and the flanged clamping portion 102 during injection molding of the cover 4. The groove 404 forms heterogeneous and seamless fit with the peripheral wall of the case 1 and the flanged clamping portion 102. The vertical groove portion 4041 is intersected and communicated with the horizontal groove portion 4042 to form the L-shaped configuration and fits with the flanged clamping portion 102 at the opening 101 of the case 1, which on the one hand extends the entering path of the external water vapor to improve the sealing and heat-resistant effect, and on the other hand, the L-shaped structure improves the structural stability and heat-resistant and shock-resistant effect.

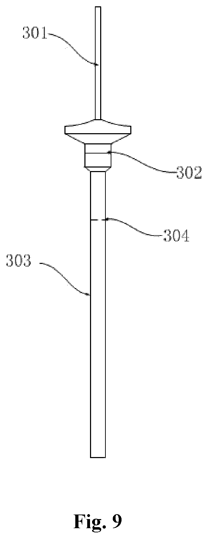

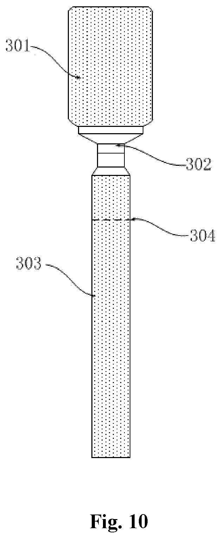

Referring to Figs. 9 and 10, the lead wire 3 includes a first portion 301 ("A part"), a second portion 302, a third portion 304, and a fourth portion 303. The first portion 301 has a sheet-shape structure. A first end of the first portion 301 is connected to the element 2, and a second end of the first portion 301 is connected to a first end of the second portion 302. A second end of the second portion 302 is weldedly connected to a first end of the third portion 304. A second end of the third portion 304 is connected to an end of the fourth portion 303. The third portion 304 and the fourth portion 303 both have a flat structure, and the third portion 304 and the fourth portion 303 are configured to together form a L-shaped structure. It is noted that "B part" could be understood as the "aluminum post." The capacitor lead wire usually includes three parts: "A part" (301 in the disclosure), "B part" (the second portion 302 in the disclosure and the aluminum post), and "C part" (the fourth portion 303 in the disclosure). In this disclosure, the "B part" can be understood as the structure without the "aluminum post", making the lead wire shorter to meet the thin design of the capacitor. Specifically, in the processing of the lead wire 3, the first portion 301 is formed by flattening the aluminum column. The lower end of the first portion 301 is welded together with the fourth portion 303 through the second portion 302 to shorten the longitudinal length of the lead wire 3. The fourth portion 303 has a flat structure that can reduce the longitudinal height of the lead wire 3. The lead wire 3 is designed to match and combine with the cover 4 to reduce the longitudinal height of the lead wire 3 and the cover 4. In addition, the lead wire 3 is preset with the third portion 304, so that the lead wire 3 does not need to be bent again after injection molding of the cover 4, avoiding the damage caused by the secondary bending to the body structure of the thinned solid aluminum electrolytic capacitor. Therefore, the structural design of the lead wire 3 of the present disclosure provides the necessary conditions for the thinning of the product.

The end face of the inner plug 402 is symmetrically provided with two lead holes 405 running through the cover 4. Each of the lead holes 405 are penetrated with the lead wire 3 as an external electrode terminal. Two lead slots 4011 are provided at the outer side of the bottom surface of the base plate 401. Ends of the two lead slots 4011 are communicated with the two lead holes 405, respectively, and the other ends of the two lead slots 4011 away from the two lead holes 405 extends to the side wall of the base plate 401.

The element 2 is formed by stacking the anode aluminum foil, the electrolytic paper, and the cathode aluminum foil, and then winding the combination of the anode aluminum foil, the electrolytic paper, and the cathode aluminum foil. The lead wire 3 is divided into an anode lead wire and a cathode lead wire. The anode aluminum foil is connected to the anode lead wire, and the cathode aluminum foil is connected to the cathode lead wire. During the injection molding of the cover 4, the lead wire 3 is pre-buried in the cover 4. After injection molding, the lead wire 3 runs between the inner plug 402 and the base plate 401, the anode and cathode lead wires 3 penetrate out of the base plate 401, and are bent at one end of the anode and cathode lead wires 3 and affixed to the lead slots 4011, respectively. The lead wire 3 is extended along the lead slot 4011 to expose the sidewall of the base plate 401. The parts of the anode and cathode lead wires exposed to the base plate 401 are soldered and fixed to the PCB. The lead wire 3 leads out externally from the element 2 and passes through the inner plug 402 and the base plate 401 and are directly welded and fixed to the PCB board. Since the inner plug 402 and the base plate 401 are integrally molded, and have both heat resistance and shock resistance, there is no need to additionally connect the base to satisfy the conditions of heat resistance and shock resistance of the surface-mount solid aluminum electrolytic capacitor. Therefore, the total height of the cover 4 can be greatly reduced while the cover 4 has good sealing performance, heat resistance and shock resistance, instead of the traditional combination design of the butyl rubber plug and the base. When the design of the cover 4 is applied to the solid aluminum electrolytic capacitor, the longitudinal length difference between the aluminum foil and the electrolytic paper can be reduced to 0.5 mm, which can further reduce the total height of the solid aluminum electrolytic capacitor, and the cutting width of the aluminum foil can be set to 1.6 mm or less. The electrolytic paper and the aluminum foil are stacked alternately, and then wound to form the cylindrical element. The "longitudinal length difference" refers to the length difference of the electrolytic paper and the aluminum foil in the longitudinal direction of the element. The longitudinal length of the electrolytic paper is designed to be longer than that of the aluminum foil to prevent the aluminum foil from being exposed in the longitudinal direction after winding. At the same time, since the base plate 401, the inner plug 402, and the sealing side wall 403 of the cover 4 are integrally molded, based on the structure of the cover 4, the total thickness of the inner plug 402 can be reduced to 1.3 mm or less, and the thickness of the base plate 401 can be reduced to 0.3 mm or less. The total height of the assembled wound solid aluminum electrolytic capacitor can be controlled to be 3.0 mm or less, which breaks through the size limitation, and the product can still resist the impact of gas expansion after reflow soldering at high temperature, and still maintains the heat resistance and shock resistance.

### Embodiment 2

The ultra-thin wound solid aluminum electrolytic capacitor is prepared as follows.

### (S1) Preparation of an element 2

The anode aluminum foil, the cathode aluminum foil, and the electrolytic paper with a preset size are prepared by cutting. The anode aluminum foil and the cathode aluminum foil are nailed with the lead wire 3, respectively. The anode aluminum foil, the electrolytic paper, and the cathode aluminum foil are sequentially stacked, and then wound to obtain the element 2.

(S2) The element 2 is assembled into the inner cavity of the case 1, and the sealing device folds the opening 101 of the case 1 inwardly to form the flanged clamping portion 102. A girdle wheel extrudes the outer peripheral wall of the case 1 to form the annular concave portion 103.

(S3) The case 1 with the element 2 assembled inside is transferred into the injection mold, and the screw rod or plunger of the injection molding machine injects the molten plastic into the injection mold through the nozzle, and the solid aluminum electrolytic capacitor sealed with the cover 4 is obtained after cooling.

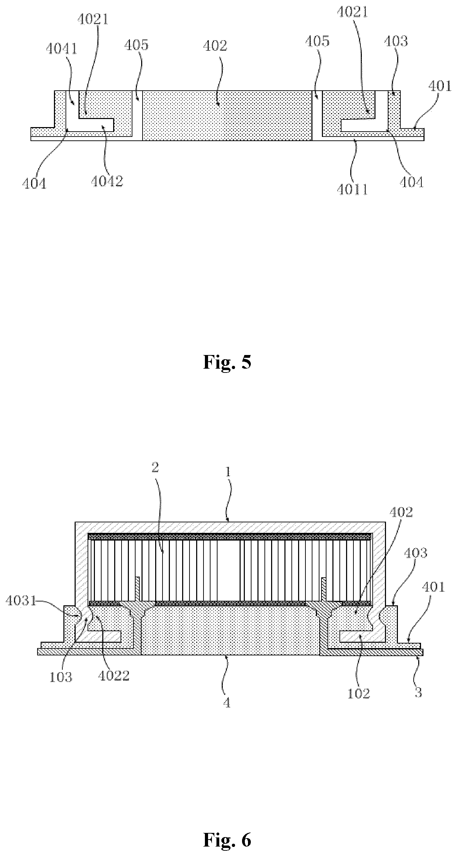

Referring to Fig. 6, embodiment 2 of the present disclosure is shown and based on embodiment 1. Specifically, the side wall of the flange structure 4021 is circumferentially provided with a concave surface 4022. The concave surface 4022 fits an inner wall of the annular concave portion 103 in the case 1.

Further, the case 1 is provided with the inwardly contracting annular concave portion 103 near the opening 101. The annular concave portion 103 is formed by machining with the girdle wheel prior to molding the injection-molded cover 4. The inner wall of the annular concave portion 103 is a convex surface, and the outer wall of the annular concave portion 103 is a concave surface. During injection molding, the inner wall of the annular concave portion 103 immersed by molten plastic is a convex surface. After cooling, the concave surface 4022 is circumferentially formed on the side wall of the flange structure 4021. The presence of the concave surface 4022 further extends the entering path of water vapor and strengthens the sealing between the outer peripheral wall of the flange structure 4021 and the inner wall of the case 1. The concave surface 4022 is combined with the inner wall of the annular concave portion 103 of the case 1, further improving the structural stability. The inner wall of the end of the sealing side wall 403 away from the base plate 401 is provided with a protruding portion 4031. The protruding portion 4031 is affixed to/ abuts against the outer wall of the annular concave portion 103 in the case 1. Specifically, the sealing side wall 403 is a structural body formed by injection molding in the cavity between the injection mold and the outer wall of the case 1. During injection molding, the concave surface of the outer wall of the annular concave portion 103 is immersed with molten plastic, which forms the protruding portion 4031 on the inner wall of the sealing side wall 403 after cooling. The presence of the protruding portion 4031 further prolongs the entry path of the water vapor, and strengthens the sealing and shock resistance of the inner peripheral wall of the sealing side wall 403 and the outer peripheral wall of the case 1. The protruding portion 4031 is matched with the concave surface of the outer wall of the annular concave portion 103 of the case 1, which further improves structural stability.

### Embodiment 3

The ultra-thin wound solid aluminum electrolytic capacitor is prepared as follows.

### (S1) Preparation of the element 2

The anode aluminum foil, the cathode aluminum foil, and the electrolytic paper with a preset size are prepared by cutting. The anode aluminum foil and the cathode aluminum foil are nailed with the lead wire, 3 respectively. The anode aluminum foil, the electrolytic paper, and the cathode aluminum foil are sequentially stacked, and then wound to obtain the element 2.

(S2) The element 2 is assembled into the inner cavity of the case 1, and the sealing device folds the opening 101 of the case 1 inwardly to form the flanged clamping portion 102. A girdle wheel extrudes the outer peripheral wall of the case 1 to form the annular concave portion 103.

(S3) The case 1 with the element 2 assembled inside is transferred into the injection mold, and the screw rod or plunger of the injection molding machine injects the molten plastic into the injection mold through the nozzle, and the solid aluminum electrolytic capacitor sealed with the cover 4 is obtained after cooling.

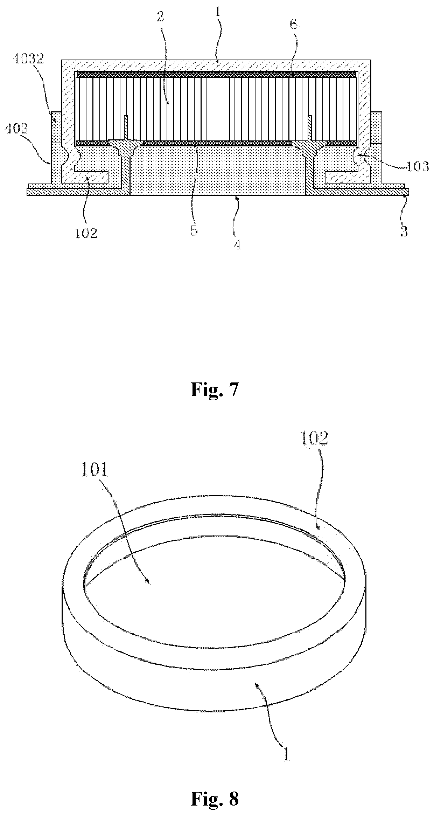

Referring to Fig. 7, embodiment 3 of the present disclosure is shown and based on embodiment 2. Specifically, an end of the sealing side wall 403 away from the base plate 401 extends to form a clamping wall 4032. The inner wall of the clamping wall 4032 is in close contact with the outer wall of the case 1.

The sealing side wall 403 and the clamping wall 4032 are molded by injection molding. The inner peripheral wall of the clamping wall 4032 closely fits with the outer peripheral wall of the case 1. The total height of the sealing side wall 403 and the clamping wall 4032 is more than one-half of the longitudinal height of the case 1. In such an arrangement, on the one hand, the entry path for water vapor is prolonged, and at the same time the sealing effect is improved. On the other hand, the combination of the sealing side wall 403 and the clamping wall 4032 increases the force area, improves resistance to thermal and mechanical stress in high-temperature reflow soldering, and improves the effect of shock resistance.

As shown in Fig. 2, the base plate 401 at the bottom of the cover 4 is rectangular. The thickness of the base plate 401 can be set to less than 0.3 mm. The corner of an end of the base plate 401 is the chamfer 4012 for distinguishing the anode and the cathode of the solid aluminum electrolytic capacitor. The entire cover 4 is integrally assembled by injection molding with plastic sealing materials such as epoxy resin. The upper end surface of the base plate 401 is integrally molded with the inner plug 402 and the sealing side wall 403 to form an interaction force and maintain a stable structure, so that the base plate 401 is set to 0.3 mm or less and still does not produce thermal deformation while suffering reflow soldering. For the conventional separate base, if the thickness is set to 0.3 mm or less, the separate base will deform under high temperature and cannot meet the sealing and heat resistance requirement. On the other hand, after welding and combining with the PCB plate, the base plate 401 of the present disclosure increases the force area, prevents the lead wire 3 from being broken by the external force, and improves the shock resistance. The integrated design (one piece) of the base plate 401 with the inner plug 402 and the sealing side wall 403 replaces the traditional separate assembly method of the rubber cover and the base, thereby realizing that the solid aluminum electrolytic capacitor still has strong sealing, heat resistance, and shock resistance when lowered to an extreme height.

As shown in Fig. 7, a first spacer 5 is provided between the end face of the inner plug 402 and the element 2, and a second spacer 6 is provided between the end face of the element 2 and the top surface of the inner cavity of the case 1.

The first spacer 5 is placed at the end face of the element 2 before injection molding. The lead wire 3 passes through the first spacer 5, and the first spacer 5 blocks the molten plastic during injection molding, thereby preventing the molten plastic to flow into the interior of the element 2, and playing a role in blocking and insulating action, and avoiding the plastic penetration between the anode aluminum foil, the cathode aluminum foil, the electrode paper, and the conductive polymer inside the element 2.

The second spacer 6 is provided between the end surface of the element 2 and the top surface of the inner cavity of the case 1. Since the foil-paper matching gap between the aluminum foil and the electrolytic paper is narrowed to 0.5 mm, the end of the anode aluminum foil is close to the inner wall of the case 1, the second spacer 6 is arranged to prevent short circuit between the end of the anode aluminum foil and the inner wall of the case 1, which improves the safety. In this embodiment, the first spacer 5 and the second spacer 6 may be insulating material with the thickness of 0.03-0.04 mm. In another embodiment, the first spacer 5 and the second spacer 6 can be made of insulating thermal conductive material, which may further improve heat resistance and heat dissipation.

Described above are merely preferred embodiments of the disclosure, which are not intended to limit the disclosure. It should be understood that any modifications and replacements made by those skilled in the art should fall within the scope of the disclosure defined by the appended claims.

## Claims

1. A solid aluminum electrolytic capacitor, comprising:
a case (1);
an element (2); and
a cover (4);
**characterized in that** a side of the case (1) is provided with an opening (101); a flanged clamping portion (102) is provided at the opening (101); and the cover (4) is embedded inside the opening (101) through injection molding to encapsulate the element (2) in the case (1);
the cover (4) comprises a base plate (401), an inner plug (402), and a sealing side wall (403); the sealing side wall (403) and the inner plug (402) are vertically provided at an upper end face of the base plate (401); the inner plug (402) is located at an inner side of the sealing side wall (403); a groove (404) is provided between the inner plug (402) and the sealing side wall (403); the groove (404) is abutted against a part of the case (1) in the groove (404); an end face of the inner plug (402) is symmetrically provided with two lead holes (405) running through the cover (4); and each of the two lead holes (405) is provided with a lead wire (3) as an electrode terminal.

2. The solid aluminum electrolytic capacitor according to claim 1, **characterized in that** the cover (4) is formed by filling a cavity between the opening (101) of the case (1) and the element (2) with a molten plastic, and solidification.

3. The solid aluminum electrolytic capacitor according to claim 1, **characterized in that** an outer edge of an upper end of the inner plug (402) is provided with a flange structure (4021) protruding outwardly; and a diameter of an outer ring of the flange structure (4021) is larger than a diameter of an outer ring of the inner plug (402).

4. The solid aluminum electrolytic capacitor according to claim 3, **characterized in that** a side wall of the flange structure (4021) is circumferentially provided with a concave surface (4022); and the concave surface (4022) is configured to fit an inner wall of an annular concave portion (103) of the case (1).

5. The solid aluminum electrolytic capacitor according to claim 1, **characterized in that** an inner wall of an end of the sealing side wall (403) away from the base plate (401) is provided with a protruding portion (4031); and the protruding portion (4031) is configured to fit an outer wall of an annular concave portion (103) in the case (1).

6. The solid aluminum electrolytic capacitor according to claim 1, **characterized in that** the groove (404) comprises a vertical groove portion (4041) and a horizontal groove portion (4042); the vertical groove portion (4041) is intersected and communicated with the horizontal groove portion (4042) to form an L-shaped configuration; the vertical groove portion (4041) is embedded in a side wall of the case (1); and the horizontal groove portion (4042) is embedded in the flanged clamping portion (102).

7. The solid aluminum electrolytic capacitor according to claim 1, **characterized in that** two lead slots (4011) are provided at an outer side of a bottom of the base plate (401); first ends of the two lead slots (4011) are communicated with the two lead holes (405), respectively; and second ends of the two lead slots (4011) are configured to extend to a side wall of the base plate (401), wherein the second ends are ends of the two lead slots (4011) away from the two lead holes (405), respectively.

8. The solid aluminum electrolytic capacitor according to claim 1, **characterized in that** a first spacer (5) is provided between the end face of the inner plug (402) and the element (2); and a second spacer (6) is provided between an end face of the element (2) and a top surface of an inner cavity of the case (1).

9. The solid aluminum electrolytic capacitor according to claim 1, **characterized in that** an end of the sealing side wall (403) away from the base plate (401) is configured to extend to form a clamping wall (4032); and an inner side of the clamping wall (4032) is configured to fit an outer wall of the case (1).

10. The solid aluminum electrolytic capacitor according to claim 1, **characterized in that** the lead wire (3) comprises a first portion (301), a second portion (302), a third portion (304) and a fourth portion (303); the first portion (301) has a sheet-shape structure; a first end of the first portion (301) is connected to the element (2); a second end of the first portion (301) is connected to a first end of the second portion (302); a second end of the second portion (302) is weldedly connected to a first end of the third portion (304); a second end of the third portion (304) is connected to an end of the fourth portion (303); the third portion (304) and the fourth portion (303) both have a flat structure; and the third portion (304) and the fourth portion (303) are configured to together form a L-shaped structure.

## Patentansprüche

1. Aluminium-Elektrolytkondensator mit festem Elektrolyten, umfassend:
ein Gehäuse (1);
ein Kondensatorelement (2); und
einen Deckel (4);
**dadurch gekennzeichnet, dass** an einer Seite des Gehäuses (1) eine Öffnung (101) ausgebildet ist, an der Öffnung (101) ein umgebördelter Klemmabschnitt (102) ausgebildet ist und der Deckel (4) durch Spritzgießen in die Öffnung (101) eingebettet ist, um das Kondensatorelement (2) in dem Gehäuse (1) einzukapseln;
wobei der Deckel (4) eine Grundplatte (401), einen Innenstopfen (402) und eine abdichtende Seitenwand (403) umfasst, die abdichtende Seitenwand (403) und der Innenstopfen (402) an einer oberen Stirnfläche der Grundplatte (401) vertikal angeordnet sind, der Innenstopfen (402) auf einer Innenseite der abdichtenden Seitenwand (403) angeordnet ist, zwischen dem Innenstopfen (402) und der abdichtenden Seitenwand (403) eine Nut (404) ausgebildet ist, die Nut (404) an einem in der Nut (404) befindlichen Teil des Gehäuses (1) anliegt, an einer Stirnfläche des Innenstopfens (402) zwei durch den Deckel (4) hindurchgehende Anschlussdrahtlöcher (405) symmetrisch ausgebildet sind und jedes der beiden Anschlussdrahtlöcher (405) mit einem Anschlussdraht (3) als Elektrodenanschluss versehen ist.

2. Aluminium-Elektrolytkondensator mit festem Elektrolyten nach Anspruch 1, **dadurch gekennzeichnet, dass** der Deckel (4) durch Befüllen eines Hohlraums zwischen der Öffnung (101) des Gehäuses (1) und dem Kondensatorelement (2) mit geschmolzenem Kunststoff und Erstarren des Kunststoffs gebildet ist.

3. Aluminium-Elektrolytkondensator mit festem Elektrolyten nach Anspruch 1, **dadurch gekennzeichnet, dass** an einem äußeren Rand eines oberen Endes des Innenstopfens (402) eine nach außen vorstehende Flanschstruktur (4021) ausgebildet ist und ein Außendurchmesser der Flanschstruktur (4021) größer als ein Außendurchmesser des Innenstopfens (402) ist.

4. Aluminium-Elektrolytkondensator mit festem Elektrolyten nach Anspruch 3, **dadurch gekennzeichnet, dass** an einer Seitenwand der Flanschstruktur (4021) in Umfangsrichtung eine konkave Fläche (4022) ausgebildet ist und die konkave Fläche (4022) passend zu einer Innenwand einer ringförmigen Einbuchtung (103) des Gehäuses (1) ausgebildet ist.

5. Aluminium-Elektrolytkondensator mit festem Elektrolyten nach Anspruch 1, **dadurch gekennzeichnet, dass** an einer Innenwand eines der Grundplatte (401) abgewandten Endes der abdichtenden Seitenwand (403) ein vorstehender Abschnitt (4031) ausgebildet ist und der vorstehende Abschnitt (4031) passend zu einer Außenwand einer ringförmigen Einbuchtung (103) in dem Gehäuse (1) ausgebildet ist.

6. Aluminium-Elektrolytkondensator mit festem Elektrolyten nach Anspruch 1, **dadurch gekennzeichnet, dass** die Nut (404) einen vertikalen Nutabschnitt (4041) und einen horizontalen Nutabschnitt (4042) umfasst, der vertikale Nutabschnitt (4041) mit dem horizontalen Nutabschnitt (4042) unter Bildung einer L-förmigen Anordnung zusammentrifft und mit diesem in Verbindung steht, der vertikale Nutabschnitt (4041) in eine Seitenwand des Gehäuses (1) eingebettet ist und der horizontale Nutabschnitt (4042) in den umgebördelten Klemmabschnitt (102) eingebettet ist.

7. Aluminium-Elektrolytkondensator mit festem Elektrolyten nach Anspruch 1, **dadurch gekennzeichnet, dass** an einer äußeren Unterseite der Grundplatte (401) zwei Anschlussdrahtnuten (4011) ausgebildet sind, erste Enden der beiden Anschlussdrahtnuten (4011) jeweils mit einem der beiden Anschlussdrahtlöcher (405) in Verbindung stehen und zweite Enden der beiden Anschlussdrahtnuten (4011) dazu ausgebildet sind, sich bis zu einer Seitenwand der Grundplatte (401) zu erstrecken, wobei die zweiten Enden jeweils die von dem zugehörigen Anschlussdrahtloch (405) entfernten Enden der beiden Anschlussdrahtnuten (4011) sind.

8. Aluminium-Elektrolytkondensator mit festem Elektrolyten nach Anspruch 1, **dadurch gekennzeichnet, dass** zwischen der Stirnfläche des Innenstopfens (402) und dem Kondensatorelement (2) ein erstes Abstandselement (5) angeordnet ist und zwischen einer Stirnfläche des Kondensatorelements (2) und einer oberen Fläche eines Innenhohlraums des Gehäuses (1) ein zweites Abstandselement (6) angeordnet ist.

9. Aluminium-Elektrolytkondensator mit festem Elektrolyten nach Anspruch 1, **dadurch gekennzeichnet, dass** ein der Grundplatte (401) abgewandtes Ende der abdichtenden Seitenwand (403) dazu ausgebildet ist, sich unter Bildung einer Klemmwand (4032) zu erstrecken, und eine Innenseite der Klemmwand (4032) passend zu einer Außenwand des Gehäuses (1) ausgebildet ist.

10. Aluminium-Elektrolytkondensator mit festem Elektrolyten nach Anspruch 1, **dadurch gekennzeichnet, dass** der Anschlussdraht (3) einen ersten Abschnitt (301), einen zweiten Abschnitt (302), einen dritten Abschnitt (304) und einen vierten Abschnitt (303) umfasst, der erste Abschnitt (301) eine plattenförmige Struktur aufweist, ein erstes Ende des ersten Abschnitts (301) mit dem Kondensatorelement (2) verbunden ist, ein zweites Ende des ersten Abschnitts (301) mit einem ersten Ende des zweiten Abschnitts (302) verbunden ist, ein zweites Ende des zweiten Abschnitts (302) durch Schweißen mit einem ersten Ende des dritten Abschnitts (304) verbunden ist, ein zweites Ende des dritten Abschnitts (304) mit einem Ende des vierten Abschnitts (303) verbunden ist, der dritte Abschnitt (304) und der vierte Abschnitt (303) beide eine flache Struktur aufweisen und der dritte Abschnitt (304) und der vierte Abschnitt (303) dazu ausgebildet sind, zusammen eine L-förmige Struktur zu bilden.

## Revendications

1. Condensateur électrolytique solide en aluminium, comprenant :
un boîtier (1) ;
un élément (2) ; et
un couvercle (4) ;
**caractérisé en ce qu'**un côté du boîtier (1) est pourvu d'une ouverture (101) ; une partie de serrage à bride (102) est prévue au niveau de l'ouverture (101) ; et le couvercle (4) est encastré à l'intérieur de l'ouverture (101) par moulage par injection pour encapsuler l'élément (2) dans le boîtier (1) ;
le couvercle (4) comprend une plaque de base (401), un bouchon interne (402) et une paroi latérale d'étanchéité (403) ; la paroi latérale d'étanchéité (403) et le bouchon interne (402) sont prévus verticalement au niveau d'une face d'extrémité supérieure de la plaque de base (401) ; le bouchon interne (402) est situé sur un côté intérieur de la paroi latérale d'étanchéité (403) ; une rainure (404) est prévue entre le bouchon interne (402) et la paroi latérale d'étanchéité (403) ; la rainure (404) est en butée contre une partie du boîtier (1) dans la rainure (404) ; une face d'extrémité du bouchon interne (402) est pourvue symétriquement de deux trous de fil conducteur (405) traversant le couvercle (4) ; et chacun des deux trous de fil conducteur (405) est pourvu d'un fil conducteur (3) en tant que borne d'électrode.

2. Condensateur électrolytique solide en aluminium selon la revendication 1, **caractérisé en ce que** le couvercle (4) est formé en remplissant une cavité entre l'ouverture (101) du boîtier (1) et l'élément (2) avec une matière plastique fondue, et en la solidifiant.

3. Condensateur électrolytique solide en aluminium selon la revendication 1, **caractérisé en ce qu'**un bord extérieur d'une extrémité supérieure du bouchon interne (402) est pourvu d'une structure de bride (4021) faisant saillie vers l'extérieur ; et un diamètre d'une bague extérieure de la structure de bride (4021) est supérieur à un diamètre d'une bague extérieure du bouchon interne (402).

4. Condensateur électrolytique solide en aluminium selon la revendication 3, **caractérisé en ce qu'**une paroi latérale de la structure de bride (4021) est pourvue circonférentiellement d'une surface concave (4022) ; et la surface concave (4022) est configurée pour s'adapter à une paroi interne d'une partie concave annulaire (103) du boîtier (1).

5. Condensateur électrolytique solide en aluminium selon la revendication 1, **caractérisé en ce qu'**une paroi interne d'une extrémité de la paroi latérale d'étanchéité (403) éloignée de la plaque de base (401) est pourvue d'une partie saillante (4031) ; et la partie saillante (4031) est configurée pour s'adapter à une paroi externe d'une partie concave annulaire (103) dans le boîtier (1).

6. Condensateur électrolytique solide en aluminium selon la revendication 1, **caractérisé en ce que** la rainure (404) comprend une partie de rainure verticale (4041) et une partie de rainure horizontale (4042) ; la partie de rainure verticale (4041) est en croise et communique avec la partie de rainure horizontale (4042) pour former une configuration en forme de L ; la partie de rainure verticale (4041) est encastrée dans une paroi latérale du boîtier (1) ; et la partie de rainure horizontale (4042) est encastrée dans la partie de serrage à bride (102).

7. Condensateur électrolytique solide en aluminium selon la revendication 1, **caractérisé en ce que** deux fentes de fil conducteur (4011) sont prévues sur un côté extérieur d'un fond de la plaque de base (401) ; les premières extrémités des deux fentes de fil conducteur (4011) sont en communication avec les deux trous de fil conducteur (405), respectivement ; et les deuxièmes extrémités des deux fentes de fil conducteur (4011) sont configurées pour s'étendre jusqu'à une paroi latérale de la plaque de base (401), dans lequel les deuxièmes extrémités sont des extrémités des deux fentes de fil conducteur (4011) éloignées des deux trous de fil conducteur (405), respectivement.

8. Condensateur électrolytique solide en aluminium selon la revendication 1, **caractérisé en ce qu'**une première entretoise (5) est prévue entre la face d'extrémité du bouchon interne (402) et l'élément (2) ; et une deuxième entretoise (6) est prévue entre une face d'extrémité de l'élément (2) et une surface supérieure d'une cavité interne du boîtier (1).

9. Condensateur électrolytique solide en aluminium selon la revendication 1, **caractérisé en ce qu'**une extrémité de la paroi latérale d'étanchéité (403) éloignée de la plaque de base (401) est configurée pour s'étendre pour former une paroi de serrage (4032) ; et un côté intérieur de la paroi de serrage (4032) est configuré pour s'adapter à une paroi externe du boîtier (1).

10. Condensateur électrolytique solide en aluminium selon la revendication 1, **caractérisé en ce que** le fil conducteur (3) comprend une première partie (301), une deuxième partie (302), une troisième partie (304) et une quatrième partie (303) ; la première partie (301) présente une structure en forme de feuille ; une première extrémité de la première partie (301) est reliée à l'élément (2) ; une deuxième extrémité de la première partie (301) est reliée à une première extrémité de la deuxième partie (302) ; une deuxième extrémité de la deuxième partie (302) est reliée par soudage à une première extrémité de la troisième partie (304) ; une deuxième extrémité de la troisième partie (304) est reliée à une extrémité de la quatrième partie (303) ; la troisième partie (304) et la quatrième partie (303) présentent toutes deux une structure plate ; et la troisième partie (304) et la quatrième partie (303) sont configurées pour former conjointement une structure en forme de L.
